# EUROPEAN PATENT SPECIFICATION

(11) **EP 2 466 824 B1**
(45) Date of publication and mention of the grant of the patent: **21.05.2014**
(21) Application number: 11190437.1
(22) Date of filing: 24.11.2011
(51) Int. Cl.: H04L 12/70

(54) **Service scheduling method and device**
Planung des zeitlichen Ablaufs von Diensten und Vorrichtung
Dispositif et procédé de programmation de services

(30) Priority: 25.11.2010 CN 201010560608
(43) Date of publication of application: 20.06.2012
(73) Proprietor: Huawei Technologies Co., Ltd., Longgang District, Shenzhen Guangdong 518129 (CN)
(72) Inventor: Wang, Dian, Shenzhen, Guangdong 518129 (CN); Wu, Zhen, Shenzhen, Guangdong 518129 (CN)
(74) Representative: Isarpatent

(56) References cited:
- US-A1- 2004 125 815
- US-A1- 2004 151 184

## Description

### FIELD OF THE INVENTION

The present invention relates to the communication field, and in particular, to a service scheduling method and device in the communication field.

### BACKGROUND OF THE INVENTION

In order to ensure that no service traffic is lost and a traffic shaping effect is realized in a communication procedure, the traffic shaping for a port mostly adopts a token bucket manner in an existing communication procedure. The traffic shaping manner of the token bucket is that: each token in the token bucket indicates one or several bytes, and if a token exists in the token bucket, data transmission is allowed; while if no token exists in the token bucket, data transmission is not allowed.

A plurality of services may exist in a communication procedure to be performed in parallel, and in order to smoothly process the plurality of services, data to be sent by the services of different priorities needs to be allocated to queues, and then the service data in the queues is sent according to a precedence relationship of the queues. In the prior art, in an application procedure of the token bucket technology, service data in queues of different priorities in the same port shares one token bucket.

In the implementation of the foregoing token bucket solution, the prior art has at least the following problems: The requirement of a service in a low priority queue for delay and jitter is not high, but data sent by the service in the low priority queue may be long. After the sending of long service data in a low priority queue is completed, the number of the tokens in the token bucket may be consumed and become a negative value, and as a result, subsequent service data to be sent cannot be sent until the number of the tokens in the token bucket is filled to a positive value. If a service to be sent subsequently, for example, a circuit emulation service, a 1588 clock message service, or a voice service, is in a high priority queue, the delay and jitter of the service in the high priority queue become larger.

United States Patent Application 20040151184A1 discloses an apparatus and method of providing rate control at a user access point of an edge network node of a packet switched communications network are described. Rate control mechanisms are presented in respect of both ingress and egress rate control with quality of service support. Multiple thresholds associated with a single leaky bucket per traffic flow direction enable the mechanism to selectively control traffic rates based on a traffic class priority criteria.

### SUMMARY OF THE INVENTION

Embodiments of the present invention provide a service scheduling method and device, so as to reduce the delay and jitter of a service in a high priority queue.

To achieve the foregoing objective, the embodiments of the present invention adopt the following technical solutions.

A service scheduling method includes:
allocating token thresholds to queues according to priorities of the queues, where a token threshold corresponding to a low priority queue is greater than a token threshold corresponding to a high priority queue; and
determining a current number of tokens in a token bucket when service data in a queue needs to be sent, comparing the current number of the tokens in the token bucket with a token threshold corresponding to a priority of the queue in which the service data needs to be sent; stopping sending the service data in the queue if the current number of the tokens is smaller than the token threshold, and sending the service data in the queue if the current number of the tokens is greater than the token threshold, wherein a difference obtained by subtracting the token threshold corresponding to the high priority queue from the token threshold corresponding to the low priority queue is not smaller than a maximum packet length of a service in the low priority queue.

A service scheduling device includes:
a configuration unit, adapted to allocate token thresholds to queues according to priorities of the queues, where a token threshold corresponding to a low priority queue is greater than a token threshold corresponding to a high priority queue; and
a processing unit, adapted to determine a current number of tokens in a token bucket when service data in a queue needs to be sent, compare the current number of the tokens in the token bucket with a token threshold corresponding to a priority of the queue in which the service data needs to be sent; stop sending the service data in the queue if the current number of the tokens in the token bucket is smaller than the token threshold, and send the service data in the queue if the current number of the tokens in the token bucket is greater than the token threshold, wherein a difference obtained by subtracting the token threshold corresponding to the high priority queue from the token threshold corresponding to the low priority queue is not smaller than a maximum packet length of a service in the low priority queue.

In the service scheduling method and device according to the embodiments of the present invention, the token thresholds are respectively configured according to the priorities of the queues, and the token threshold corresponding to a low priority queue is greater than the token threshold corresponding to a high priority queue. When the current number of the tokens in the token bucket is greater than or equal to the maximum token threshold, the services in the queues of all priorities are allowed to be sent. If a long packet in a lower priority queue is sent first, a large number of tokens in the token bucket are consumed, and in this case, if a service in a higher priority queue needs to be sent, the following situations may occur.
1. Since the number of the tokens is required to be greater than or equal to the larger token threshold when the long packet in the lower priority queue is sent previously, after the sending of the long packet in the lower priority queue is completed, the number of the remaining tokens may still be greater than the smaller token threshold, so that subsequently a service in the higher priority queue can be sent directly, thereby reducing the delay and jitter of the service in the higher priority queue.
2. In the case that the number of the tokens is greater than or equal to the larger token threshold, even if the number of the remaining tokens is smaller than the smaller token threshold after the sending of the long packet in the lower priority queue is completed, as long as the number of the tokens in the token bucket is restored to the smaller token threshold, and the number of the tokens that need to be restored (the specific value is a difference between the previous number of the tokens and the larger token threshold) is smaller than or equal to a value obtained by subtracting a difference between the two thresholds from the length of the long packet in the lower priority queue, the service in the higher priority queue can be sent. However, in the prior art, in the case that the number of the tokens is greater than or equal to the token threshold, after the sending of a long packet in a lower priority queue is completed, a subsequent service can be sent only when the number of the tokens that need to be restored (the specific value is a difference between the previous number of the tokens and the larger token threshold) is smaller than or equal to the length of the long packet in the lower priority queue. Therefore, in the embodiments of the present invention, the time for restoring the number of the tokens is shorter compared with that in the prior art, so that the service in the high priority queue is more quickly allowed to be sent, thereby reducing the delay and jitter of the service in the high priority queue.

Moreover, when the current number of the tokens in the token bucket falls between two token thresholds, the sending of the service in the queue corresponding to the higher token threshold (the service in the lower priority queue) may be limited, but the sending of the service in the queue corresponding to the lower token threshold (the service in the higher priority queue) is allowed, so as to ensure that the service in the higher priority queue can be sent preferably, thereby reducing the delay and jitter of the service in the higher priority queue.

### BRIEF DESCRIPTION OF THE DRAWINGS

To illustrate the technical solutions according to the embodiments of the present invention or in the prior art more clearly, the accompanying drawings for describing the embodiments or the prior art are given briefly below. Apparently, the accompanying drawings in the following description are only about some embodiments of the present invention, and persons of ordinary skill in the art can derive other drawings from the accompanying drawings without creative efforts.
FIG. 1 is a flowchart of a service scheduling method according to Embodiment 1 of the present invention;
FIG. 2 is a block diagram of a service scheduling device according to Embodiment 1 of the present invention;
FIG 3 is a flowchart of a service scheduling method according to Embodiment 2 of the present invention; and
FIG 4 is a block diagram of a service scheduling device according to Embodiment 2 of the present invention.

### DETAILED DESCRIPTION OF THE EMBODIMENTS

The technical solutions of the present invention will be clearly and comprehensively described in the following with reference to the accompanying drawings of the embodiments of the present invention. It is obvious that the embodiments to be described are only a part rather than all of the embodiments of the present invention. All other embodiments obtained by persons of ordinary skill in the art based on the embodiments of the present invention without creative effects shall fall within the protection scope of the present invention.

### Embodiment 1

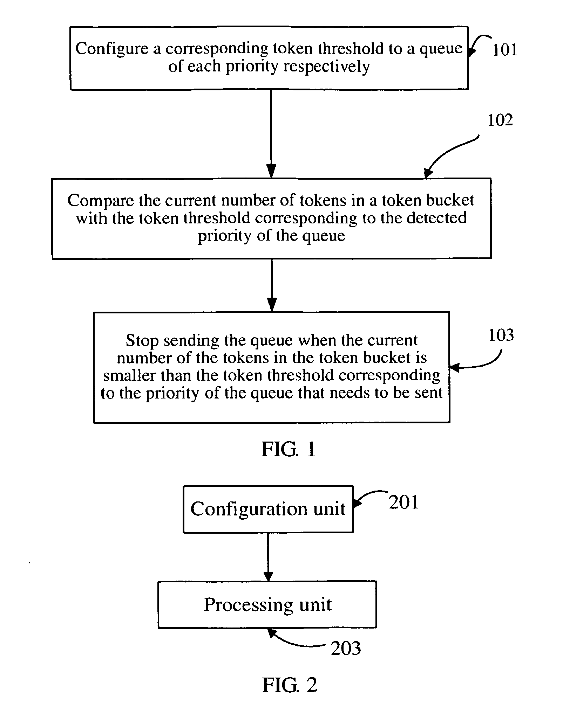

The embodiment of the present invention provides a service scheduling method, and as shown in FIG. 1, the service scheduling method includes the following steps.

101: Allocate token thresholds to queues according to priorities of the queues, where a token threshold corresponding to a low priority queue is greater than a token threshold corresponding to a high priority queue.

In the embodiment of the present invention, in order to conveniently control services in the queues of different priorities respectively, before a service in a queue is sent, a corresponding token threshold is configured for a queue of each priority, and the token threshold corresponding to the low priority queue is greater than the token threshold corresponding to the high priority queue.

Generally, priorities of queues may be divided into two or more than two types. For example, the queues are divided into two priorities, including a high priority queue and a low priority queue, where the high priority queue corresponds to a lower token threshold, and the low priority queue corresponds to a higher token threshold. Further, for example, the queues are divided into three priorities, including a high priority queue, an intermediate priority queue, and a low priority queue, where the high priority queue corresponds to a lower token threshold, the intermediate priority queue corresponds to an intermediate token threshold, and the low priority queue corresponds to a higher token threshold.

Practically, the queues may be divided into more priorities and each configured with a corresponding token threshold, and the details will not be described herein again.

102: Determine the current number of the tokens in the token bucket when a service needs to be sent, and compare the current number of the tokens in the token bucket with the token threshold corresponding to the priority of the queue that needs to be sent, where in this procedure, the current number of the tokens in the token bucket may be obtained in a recording manner.

103: Stop sending the queue when the current number of the tokens in the token bucket is smaller than the token threshold corresponding to the priority of the queue that needs to be sent, thereby limiting continuous consumption of the tokens in the token bucket; and send the queue when the current number of the tokens in the token bucket is greater than or equal to the token threshold corresponding to the priority of the queue that needs to be sent.

During specific implementation, the manner of stopping sending the queue may adopt, but is not limited to, a solution as follows: a status of the queue where the service that needs to be sent is located is set as an invalid status, and since the service located in the queue that is in the invalid status is not allowed to be sent, the purpose of stopping sending the queue is achieved.

The embodiment of the present invention further provides a service scheduling device, and as shown in FIG. 2, the device includes: a configuration unit 201 and a processing unit 203.

In the embodiment of the present invention, in order to conveniently control services in the queues of different priorities respectively, before a service in a queue is sent, the configuration unit 201 configures corresponding token thresholds for queues of at least two priorities respectively, where the token threshold corresponding to the low priority queue is greater than the token threshold corresponding to the high priority queue; and the processing unit 203 is adapted to determine the current number of the tokens in the token bucket when the queue needs to be sent, and stop sending the queue when the current number of the tokens in the token bucket is smaller than the token threshold corresponding to the priority of the queue that needs to be sent, thereby limiting continuous consumption of the tokens in the token bucket, and the processing unit 203 is further adapted to send the queue when the current number of the tokens in the token bucket is greater than the token threshold.

In the service scheduling method and device according to the embodiments of the present invention, the token thresholds are respectively configured according to the priorities of the queues, and the token threshold corresponding to a low priority queue is greater than the token threshold corresponding to a high priority queue. When the current number of the tokens in the token bucket is greater than or equal to the maximum token threshold, the services in the queues of all priorities are allowed to be sent. If a long packet in a lower priority queue is sent first, a large number of tokens in the token bucket are consumed, and in this case, if a service in a higher priority queue needs to be sent, the following situations may occur.
1. Since the number of the tokens is required to be greater than or equal to the larger token threshold when the long packet in the lower priority queue is sent previously, after the sending of the long packet in the lower priority queue is completed, the number of the remaining tokens may still be greater than the smaller token threshold, so that subsequently a service in the higher priority queue can be sent directly, thereby reducing the delay and jitter of the service in the higher priority queue.
2. In the case that the number of the tokens is greater than or equal to the larger token threshold, even if the number of the remaining tokens is smaller than the smaller token threshold after the sending of the long packet in the lower priority queue is completed, as long as the number of the tokens in the token bucket is restored to the smaller token threshold, and the number of the tokens that need to be restored (the specific value is a difference between the previous number of the tokens and the larger token threshold) is smaller than or equal to a value obtained by subtracting a difference between the two thresholds from the length of the long packet in the lower priority queue, the service in the higher priority queue can be sent. However, in the prior art, in the case that the number of the tokens is greater than or equal to the token threshold, after the sending of a long packet in a lower priority queue is completed, a subsequent service can be sent only when the number of the tokens that need to be restored (the specific value is a difference between the previous number of the tokens and the larger token threshold) is smaller than or equal to the length of the long packet in the lower priority queue. Therefore, in the embodiments of the present invention, the time for restoring the number of the tokens is shorter compared with that in the prior art, so that the service in the high priority queue is more quickly allowed to be sent, thereby reducing the delay and jitter of the service in the high priority queue.

Moreover, when the current number of the tokens in the token bucket falls between two token thresholds, the sending of the service in the queue corresponding to the higher token threshold (the service in the lower priority queue) may be limited, but the sending of the service in the queue corresponding to the lower token threshold (the service in the higher priority queue) is allowed, so as to ensure that the service in the higher priority queue can be sent preferably, thereby reducing the delay and jitter of the service in the higher priority queue.

### Embodiment 2

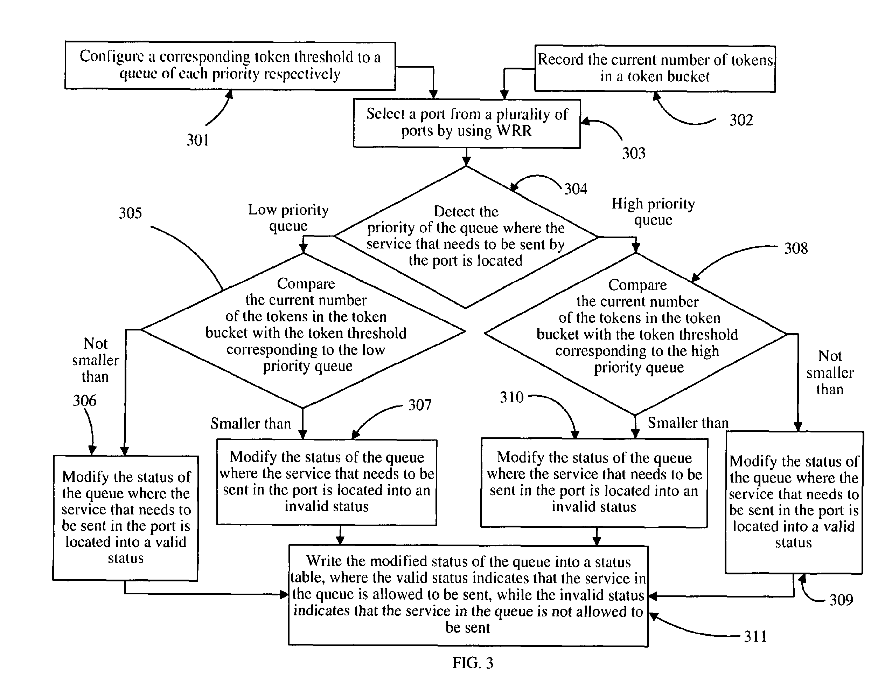

The embodiment of the present invention provides a service scheduling method. Services may be divided into a plurality of priorities, and in the embodiment of the present invention, the services are divided into a high priority and a low priority as an example for illustration. As shown in FIG. 3, the service scheduling method includes the following steps.

301: In the embodiment of the present invention, in order to conveniently control services in the queues of different priorities respectively, before a service is sent, a corresponding token threshold is configured for a queue of each priority, and the token threshold corresponding to the low priority queue is greater than the token threshold corresponding to the high priority queue.

Generally, the token threshold corresponding to the low priority queue is required to be greater than the token threshold corresponding to the high priority queue, and when the service in the high priority queue needs to be sent, as long as the number of the tokens in the token bucket is restored to the lower token threshold, through subsequent processing, the service in the high priority queue is allowed to be sent, thereby reducing the delay and jitter of the service in the high priority queue.

In order to make the number of the remaining tokens in the token bucket not smaller than the lower token threshold (that is, the token threshold corresponding to the high priority queue) after a service in a long queue of a low priority is sent, and ensure that the subsequently arriving service in the high priority queue is allowed to be sent timely, when the token threshold is configured, a difference obtained by subtracting the token threshold corresponding to the high priority queue from the token threshold corresponding to the low priority queue is required to be not smaller than a maximum packet length of the service in the low priority queue. Definitely, in order to ensure that the service in the low priority queue can be sent smoothly, in the embodiment of the present invention, the token threshold corresponding to the low priority queue cannot be excessively high, so as to avoid a problem that the service in the low priority queue always cannot be sent out.

302: In order to conveniently compare the current number of the tokens in the token bucket with the token threshold, the current number of the tokens in the token bucket needs to be recorded.

303: When services of a plurality of ports need to be sent, in order to better balance time of sending the services between the ports, one port may be selected from the plurality of ports by using Weighted Round Robin (WRR); and if only one port exists, this procedure may be omitted, and the procedure 304 is directly executed.

304: After the port is determined, in order to select a corresponding service from the port to be sent, the priority of the queue where the service that needs to be sent by the port is located needs to be detected, and if it is detected that the queue where the service that needs to be sent by the port is located is the low priority queue, the procedure 305 is executed; while if it is detected that the queue where the service that needs to be sent by the port is located is the high priority queue, the procedure 308 is executed.

During a practical application, generally the high priority queue is arranged before the low priority queue, so that the priority of the queue where the service that needs to be sent by the port is located may be determined by only detecting the priority of the queue where the service that needs to be currently sent is located. If the queue where the service that needs to be currently sent is located is the low priority queue, it may be considered that the queue where the service that is to be sent by the port is located is the low priority queue, and the procedure 305 is executed. If the queue where the service that needs to be currently sent is located is the high priority queue, it is indicated that the queue where the service that is to be sent by the port is located is the high priority queue, the procedure 308 is executed.

305: Determine the current number of the tokens in the token bucket, and compare the recorded current number of the tokens in the token bucket with the token threshold corresponding to the low priority queue (that is, the higher token threshold), and if the current number of the tokens in the token bucket is not smaller than the higher token threshold, the procedure 306 is executed; while if the current number of the tokens in the token bucket is smaller than the higher token threshold, the procedure 307 is executed.

306: Modify the status of the queue where the service that needs to be sent and is in the port is located into a valid status, and execute step 311.

307: Modify the status of the queue where the service that needs to be sent and is in the port is located into an invalid status, and execute step 311.

308: Compare the recorded current number of the tokens in the token bucket with the token threshold corresponding to the high priority queue (that is, the lower token threshold), and if the current number of the tokens in the token bucket is not smaller than the lower token threshold, the procedure 309 is executed; while if the current number of the tokens in the token bucket is smaller than the lower token threshold, the procedure 310 is executed.

309: Modify the status of the queue where the service that needs to be sent and is in the port is located into a valid status, and execute step 311.

310: Modify the status of the queue where the service that needs to be sent and is in the port is located into an invalid status, and execute step 311.

311: Write the modified status of the queue where the service is located into a status table, where the valid status indicates that the service in the queue is allowed to be sent, while the invalid status indicates that the service in the queue is not allowed to be sent. In a practical application, whether the queue where the service that is to be sent and is in the port is located is specifically in the valid status or the invalid status may be determined through the status table and a configuration table, and the priority of the corresponding queue generating the status is determined, so as to facilitate the port scheduling.

A comparison procedure is performed in the foregoing procedure 305 and procedure 308. During a practical application, two numbers that need to be compared may be respectively read into corresponding storages, and then a comparer is used to compare the values in the storages, which is an ordinary comparison technology, and the specific implementation of the comparer and the storage is not repeated herein.

In the embodiment of the present invention, queues of two priorities are taken as an example for illustration, and during a practical application, the priority types of the queues may be three or even more, where a token threshold needs to be set correspondingly for a queue of each priority, and the relation between token thresholds about which token threshold is larger and which token threshold is smaller is the same as that required in the foregoing procedure 301.

In the prior art, as long as the number of the tokens is greater than 0, services in queues of various priorities are allowed to be sent until the number of the tokens in the token bucket turns into a negative value, and in the token restoration procedure, as long as the number of the tokens is greater than or equal to 0, the services in the queues are allowed to be sent again (regardless of the levels of the priorities of the queues where the services are located).

Since the threshold 0 is uniformly adopted for control in the existing token bucket technology, in the embodiment of the present invention, the token threshold corresponding to the highest priority queue had better be set to 0, so that in the embodiment of the present invention, the effect of reducing the delay and jitter of the service in the high priority queue is more apparent.

In the following, an application scenario is taken as an example for illustration: the high token threshold is 100, and the low token threshold is 0. In this scenario, when the number of the tokens is consumed to be smaller than 100 and larger than 0, the service in the low priority queue is not allowed to be sent, while the service in the high priority queue can be sent, and in this case, it can be ensured that the service in the high priority queue may be continuously sent; and in the period that the number of the tokens is restored to 100, the service in the high priority queue can be sent timely, thereby achieving lower delay and jitter.

If the number of the tokens is consumed to be smaller than 0 and is assumed to be -2, in the prior art, after waiting for two tokens to be restored, a service in a queue of any priority is allowed to be sent; and if, in this case, the firstly arriving service is a service in a low priority queue, the subsequently arriving service that is in the high priority queue needs to continue waiting, so that in the prior art, the delay and jitter of the service in the high priority queue are relatively high. However, in the present invention, likewise, after waiting for two tokens to be restored, the service in the high priority queue can be continuously sent, but the service in the low priority queue is not allowed to be immediately sent, thereby reducing the delay and jitter of the service in the high priority queue.

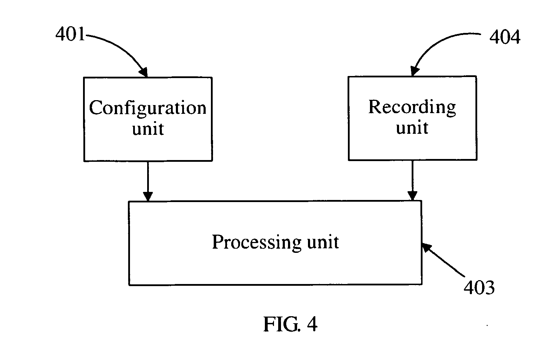

The embodiment of the present invention further provides a service scheduling device, and as shown in FIG. 4, the device includes a configuration unit 401, a processing unit 403, and a recording unit 404.

The configuration unit 401 is adapted to respectively configure corresponding token thresholds for queues of at least two priorities, where the token threshold corresponding to the low priority queue is greater than the token threshold corresponding to the high priority queue, and specifically, the configured token thresholds may be stored into a storage in the form of a configuration table. After a port is determined, if a queue that needs to be sent exists in the port, the processing unit 403 is adapted to set the status of the queue where the service that needs to be sent is located as the invalid status, when the current number of the tokens in the token bucket is smaller than the token threshold corresponding to the priority of the queue that needs to be sent, so as to stop sending the queue.

By setting the status of the queue where the service is located as the invalid status, the service may be forbidden from being sent out, and since the token threshold corresponding to the low priority queue is greater than the token threshold corresponding to the high priority queue, when the service in the high priority queue needs to be sent, the number of the tokens in the token bucket only needs to be restored to the lower token threshold. As the token threshold that needs to be restored is low, the restoration time is shortened, thereby reducing the delay and jitter of the service in the high priority queue.

In order to ensure the service to be sent out, in the embodiment of the present invention, the processing unit 403 is further adapted to set the status of the queue where the service that needs to be sent is located as the valid status when the current number of the tokens in the token bucket is not smaller than the token threshold corresponding to the priority of the queue that needs to be sent, and when the queue status is in the valid status, the queue may be sent.

The current number of the tokens in the token bucket may be recorded by the recording unit 404.

In order to make the number of the remaining tokens in the token bucket not smaller than the lower token threshold (that is, the token threshold corresponding to the high priority queue) after a service in a long queue of a low priority is sent, and ensure that the subsequently arriving service in the high priority queue is allowed to be sent timely, when the configuration unit 401 configures the token threshold, the difference obtained by subtracting the token threshold corresponding to the high priority queue from the token threshold corresponding to the low priority queue is required to be not smaller than a maximum packet length of the service in the low priority queue.

For the priority of the embodiment of the present invention, a default priority of a queue itself may be directly adopted, so that users are enabled to manage queue priorities uniformly; or a priority that is set temporarily for a queue may be adopted, and in this way, users are enabled to conveniently manage queue priorities, so as to implement personalized services.

In the embodiment of the present invention, the processing unit 403 may be implemented in the following manner: the processing unit includes a storage, a comparer, and a status table. The storage is adapted to store a record result, which is submitted by the recording unit, of the current number of the tokens, and a token threshold configured in the configuration unit; when it is detected that the queue that needs to be sent is of a high priority, the token threshold in the storage is a lower token threshold; and when it is detected that the queue that needs to be sent is of a low priority, the token threshold in the storage is a higher token threshold.

The above comparer compares two pieces of data in the storage, and writes a comparison result into the status table. If the comparison result is that the current number of the tokens is not smaller than the token threshold, the valid status is written into the status table; and if the comparison result is that the current number of the tokens is smaller than the token threshold, the invalid status is written into the status table.

In the service scheduling method and device according to the embodiments of the present invention, the token thresholds are respectively configured according to the priorities of the queues, the token threshold corresponding to a low priority queue is greater than the token threshold corresponding to a high priority queue, and by setting the status of the priority queue where the service is located as the invalid status, the service is not allowed to be sent.

When the current number of the tokens in the token bucket is greater than or equal to the maximum token threshold, the services in the queues of all priorities are allowed to be sent. If a long packet in a lower priority queue is sent first, a large number of tokens in the token bucket are consumed, and in this case, if a service in a higher priority queue needs to be sent, the following situations may occur.
1. Since the number of the tokens is required to be greater than or equal to the larger token threshold when the long packet in the lower priority queue is sent previously, after the sending of the long packet in the lower priority queue is completed, the number of the remaining tokens may still be greater than the smaller token threshold, so that subsequently a service in the higher priority queue can be sent directly, thereby reducing the delay and jitter of the service in the higher priority queue.
2. In the case that the number of the tokens is greater than or equal to the larger token threshold, even if the number of the remaining tokens is smaller than the smaller token threshold after the sending of the long packet in the lower priority queue is completed, as long as the number of the tokens in the token bucket is restored to the smaller token threshold, and the number of the tokens that need to be restored (the specific value is a difference between the previous number of the tokens and the larger token threshold) is smaller than or equal to a value obtained by subtracting a difference between the two thresholds from the length of the long packet in the lower priority queue, the service in the higher priority queue can be sent. However, in the prior art, in the case that the number of the tokens is greater than or equal to the token threshold, after the sending of a long packet in a lower priority queue is completed, a subsequent service can be sent only when the number of the tokens that need to be restored (the specific value is a difference between the previous number of the tokens and the larger token threshold) is smaller than or equal to the length of the long packet in the lower priority queue. Therefore, in the embodiments of the present invention, the time for restoring the number of the tokens is shorter compared with that in the prior art, so that the service in the high priority queue is more quickly allowed to be sent, thereby reducing the delay and jitter of the service in the high priority queue.

Moreover, when the current number of the tokens in the token bucket falls between two token thresholds, the sending of the service in the queue corresponding to the higher token threshold (the service in the lower priority queue) may be limited, but the sending of the service in the queue corresponding to the lower token threshold (the service in the higher priority queue) is allowed, so as to ensure that the service in the higher priority queue can be sent preferably, thereby reducing the delay and jitter of the service in the higher priority queue.

The embodiments of the present invention are mainly used for various network services, such as a protocol message service, a voice message service, and a 1588 message service.

Through the descriptions of the preceding embodiments, persons skilled in the art may clearly understand that the present invention may be implemented by hardware or by software plus a necessary universal hardware. However, in most cases, using software plus a necessary universal hardware platform are preferred. Based on such understandings, the technical solutions of the present invention or the part that makes contributions to the prior art may be substantially embodied in the form of a software product. The computer software product may be stored in a computer readable storage medium, such as a floppy disk, a hard disk, or an optical disk of the computer. The software product includes several instructions to instruct a computer device (for example, a personal computer, a server, or a network device) to perform the method described in the embodiments of the present invention.

The foregoing descriptions are merely exemplary embodiments of the present invention, but are not intended to limit the protection scope of the present invention. Various modifications and variations made by persons skilled in the art without departing from the technical scope disclosed by the present invention shall fall within the protection scope of the present invention. Therefore, the protection scope of the present invention is subject to the appended claims.

## Claims

1. A service scheduling method, the service scheduling method comprises:
allocating (101,301) token thresholds to queues according to priorities of the queues, wherein a token threshold corresponding to a low priority queue is greater than a token threshold corresponding to a high priority queue; and
determining a current number of tokens in a token bucket when service data in a queue needs to be sent, comparing(102) the current number of the tokens in the token bucket with a token threshold corresponding to a priority of the queue in which the service data needs to be sent; stopping(103) sending the service data in the queue if the current number of the tokens is smaller than the token threshold corresponding to the priority of the queue in which the service data needs to be sent, and sending the service data in the queue if the current number of the tokens is greater than the token threshold corresponding to the priority of the queue in which the service data needs to be sent, wherein a difference obtained by subtracting the token threshold corresponding to the high priority queue from the token threshold corresponding to the low priority queue is not smaller than a maximum packet length of a service in the low priority queue.

2. The service scheduling method according to claim 1, **characterized in that**, the service scheduling method further comprises: recording(302) the current number of tokens in the token bucket.

3. The service scheduling method according to claim 1, **characterized in that**, the priority comprises: a default priority of the queue itself or a priority temporarily set for the queue.

4. The service scheduling method according to claim 1, **characterized in that** a token threshold corresponding to a highest priority queue is 0; or in a practical application, a token threshold corresponding to a lowest priority queue is 0, while the token threshold corresponding to the high priority queue is a negative value.

5. A service scheduling device, the service scheduling device comprises:
a configuration unit(201,401), adapted to allocate token thresholds to queues according to priorities of the queues, wherein a token threshold corresponding to a low priority queue is greater than a token threshold corresponding to a high priority queue; and
a processing unit(203,403), adapted to determine a current number of tokens in a token bucket when service data in a queue needs to be sent, compare the current number of the tokens in the token bucket with a token threshold corresponding to a priority of the queue in which the service data needs to be sent; stop sending the service data in the queue if the current number of the tokens in the token bucket is smaller than the token threshold, and send the service data in the queue if the current number of the tokens in the token bucket is greater than the token threshold, wherein a difference obtained by subtracting the token threshold corresponding to the high priority queue from the token threshold corresponding to the low priority queue is not smaller than a maximum packet length of a service in the low priority queue.

6. The service scheduling device according to claim 5, **characterized in that** the service scheduling device further comprises:
a recording unit(404), adapted to record the current number of the tokens in the token bucket.

7. The service scheduling device according to claim 5, **characterized in that**, the priority comprises: a default priority of the queue itself or a priority temporarily set for the queue.

## Patentansprüche

1. Verfahren für das Planen eines zeitlichen Ablaufs von Diensten, wobei das Verfahren für das Planen eines zeitlichen Ablaufs von Diensten umfasst:
Zuteilen (101, 301) von Token-Schwellenwerten an Warteschlangen gemäß Prioritäten der Warteschlangen, wobei ein Token-Schwellenwert, der einer Warteschlange mit einer niedrigen Priorität entspricht, größer ist als ein Token-Schwellenwert, der einer Warteschlange mit einer hohen Priorität entspricht; und
Bestimmen einer aktuellen Anzahl der Token in einem Token-Speicherbereich, wenn Dienstdaten in einer Warteschlange gesendet werden müssen, Vergleichen (102) der aktuellen Anzahl der Token in dem Token-Speicherbereich mit einem Token-Schwellenwert, der einer Priorität der Warteschlange entspricht, deren Dienstdaten gesendet werden müssen, Stoppen (103) des Sendens der Dienstdaten in der Warteschlange, wenn die aktuelle Anzahl der Token kleiner ist als der Token-Schwellenwert, welcher der Priorität der Warteschlange entspricht, deren Dienstdaten gesendet werden müssen, und Senden der Dienstdaten in der Warteschlange, wenn die aktuelle Anzahl der Token größer ist als der Token-Schwellenwert, welcher der Priorität der Warteschlange entspricht, deren Dienstdaten gesendet werden müssen,
wobei eine Differenz, die durch das Subtrahieren des Token-Schwellenwerts,
welcher der Warteschlange mit der hohen Priorität entspricht, von dem Token-Schwellenwert, welcher der Warteschlange mit der niedrigen Priorität entspricht,
erlangt wird, nicht kleiner ist als eine maximale Paketlänge eines Dienstes in der Warteschlange mit der niedrigen Priorität.

2. Verfahren für das Planen eines zeitlichen Ablaufs von Diensten nach Anspruch 1, **dadurch gekennzeichnet, dass** das Verfahren für das Planen eines zeitlichen Ablaufs von Diensten außerdem ein Aufzeichnen (302) der aktuellen Anzahl von Token in dem Token-Speicherbereich umfasst.

3. Verfahren für das Planen eines zeitlichen Ablaufs von Diensten nach Anspruch 1, **dadurch gekennzeichnet, dass** die Priorität eine standardmäßige Priorität der Warteschlange selbst oder eine vorübergehend festgelegte Priorität für die Warteschlange umfasst.

4. Verfahren für das Planen eines zeitlichen Ablaufs von Diensten nach Anspruch 1, **dadurch gekennzeichnet, dass** ein Token-Schwellenwert, welcher einer Warteschlange mit der höchsten Priorität entspricht, gleich 0 ist oder dass in einer praktischen Anwendung ein Token-Schwellenwert, welcher einer Warteschlange mit der niedrigsten Priorität entspricht, gleich 0 ist, während der Token-Schwellenwert, welcher der Warteschlange mit der höchsten Priorität entspricht, einen negativen Wert aufweist.

5. Vorrichtung für das Planen eines zeitlichen Ablaufs von Diensten, wobei die Vorrichtung für das Planen eines zeitlichen Ablaufs von Diensten umfasst:
eine Konfigurationseinheit (201, 401), die geeignet ist, Token-Schwellenwerte an Warteschlangen gemäß Prioritäten der Warteschlangen zuzuteilen, wobei ein Token-Schwellenwert, der einer Warteschlange mit einer niedrigen Priorität entspricht,
größer ist als ein Token-Schwellenwert, der einer Warteschlange mit einer hohen Priorität entspricht; und
eine Verarbeitungseinheit (203, 403), die geeignet ist, eine aktuelle Anzahl von Token in einem Token-Speicherbereich zu bestimmen, wenn Dienstdaten in einer Warteschlange gesendet werden müssen, die aktuelle Anzahl der Token in dem Token-Speicherbereich mit einem Token-Schwellenwert, der einer Priorität der Warteschlange entspricht, deren Dienstdaten gesendet werden müssen, zu vergleichen, das Senden der Dienstdaten in der Warteschlange zu stoppen, wenn die aktuelle Anzahl der Token in dem Token-Speicherbereich kleiner ist als der Token-Schwellenwert, und die Dienstdaten in der Warteschlange zu senden, wenn die aktuelle Anzahl der Token in dem Token-Speicherbereich größer ist als der Token-Schwellenwert, wobei eine Differenz, die durch das Subtrahieren des Token-Schwellenwerts, welcher der Warteschlange mit der hohen Priorität entspricht, von dem Token-Schwellenwert, welcher der Warteschlange mit der niedrigen Priorität entspricht, erlangt wird, nicht kleiner ist als eine maximale Paketlänge eines Dienstes in der Warteschlange mit der niedrigen Priorität.

6. Vorrichtung für das Planen eines zeitlichen Ablaufs von Diensten nach Anspruch 5, **dadurch gekennzeichnet, dass** die Vorrichtung für das Planen eines zeitlichen Ablaufs von Diensten außerdem eine Aufzeichnungseinheit (404) umfasst, die geeignet ist, die aktuelle Anzahl der Token in dem Token-Speicherbereich aufzuzeichnen.

7. Vorrichtung für das Planen eines zeitlichen Ablaufs von Diensten nach Anspruch 5, **dadurch gekennzeichnet, dass** die Priorität eine standardmäßige Priorität der Warteschlange selbst oder eine vorübergehend festgelegte Priorität für die Warteschlange umfasst.

## Revendications

1. Procédé d'ordonnancement de services, le procédé d'ordonnancement de services comprenant :
l'allocation (101, 301) de seuils de jetons à des files d'attente en fonction de priorités des files d'attente, dans lequel un seuil de jetons correspondant à une file d'attente de faible priorité est supérieur à un seuil de jetons correspondant à une file d'attente de priorité élevée ; et
la détermination d'un nombre courant de jetons dans un compartiment à jetons lorsque des données de services d'une file d'attente doivent être envoyées, la comparaison (102) du nombre courant des jetons dans le compartiment à jetons à un seuil de jetons correspondant à une priorité de la file d'attente dans laquelle il est nécessaire d'envoyer les données de services ; la cessation (103) de l'envoi des données de services contenues dans la file d'attente si le nombre courant des jetons est inférieur au seuil de jetons correspondant à la priorité de la file d'attente dans laquelle il est nécessaire d'envoyer les données de services, et l'envoi des données de services contenues dans la file d'attente si le nombre courant des jetons est supérieur au seuil de jetons correspondant à la priorité de la file d'attente dans laquelle il est nécessaire d'envoyer les données de services, dans lequel une différence obtenue en soustrayant le seuil de jetons correspondant à la file d'attente de priorité élevée au seuil de jetons correspondant à la file d'attente de faible priorité n'est pas inférieure à une longueur de paquet maximum d'un service dans la file d'attente de faible priorité.

2. Procédé d'ordonnancement de services selon la revendication 1, **caractérisé en ce que** le procédé d'ordonnancement de services comprend en outre : l'enregistrement (302) du nombre courant de jetons dans le compartiment à jetons.

3. Procédé d'ordonnancement de services selon la revendication 1, **caractérisé en ce que** la priorité comprend une priorité par défaut de la file d'attente elle-même ou une priorité fixée temporairement pour la file d'attente.

4. Procédé d'ordonnancement de services selon la revendication 1, **caractérisé en ce qu'**un seuil de jetons correspondant à une file d'attente ayant la priorité la plus élevée est égal à 0 ; ou, dans une application pratique, **en ce qu'**un seuil de jetons correspondant à une file d'attente de priorité la plus faible est égal à 0, tandis que le seuil de jetons correspondant à la file d'attente de priorité élevée est une valeur négative.

5. Dispositif d'ordonnancement de services, le dispositif d'ordonnancement de services comprenant :
une unité de configuration (201, 401), apte à allouer des seuils de jetons à des files d'attente en fonction de priorités des files d'attente, dans lequel un seuil de jetons correspondant à une file d'attente de faible priorité est supérieur à un seuil de jetons correspondant à une file d'attente de priorité élevée ; et
une unité de traitement (203, 403), apte à déterminer un nombre courant de jetons contenus dans un compartiment à jetons lorsqu'il est nécessaire d'envoyer des données de services contenues dans une file d'attente, à comparer le nombre courant des jetons contenus dans le compartiment à jetons à un seuil de jetons correspondant à une priorité de la file d'attente dans laquelle il est nécessaire d'envoyer les données de services ; à cesser d'envoyer les données de services contenues dans la file d'attente si le nombre courant des jetons contenus dans le compartiment à jetons est inférieur au seuil de jetons, et à envoyer les données de services contenues dans la file d'attente si le nombre courant des jetons contenus dans le compartiment à jetons est supérieur au seuil de jetons, dans lequel une différence obtenue en soustrayant le seuil de jetons correspondant à la file d'attente de priorité élevée au seuil de jetons correspondant à la file d'attente de faible priorité n'est pas inférieure à une longueur de paquet maximum d'un service contenu dans la file d'attente de faible priorité.

6. Dispositif d'ordonnancement de services selon la revendication 5, **caractérisé en ce que** le dispositif d'ordonnancement de services comprend en outre :
une unité d'enregistrement (404), apte à enregistrer le nombre courant des jetons contenus dans le compartiment à jetons.

7. Dispositif d'ordonnancement de services selon la revendication 5, **caractérisé en ce que** la priorité comprend : une priorité par défaut de la file d'attente elle-même ou une priorité fixée temporairement pour la file d'attente.
